# EUROPEAN PATENT APPLICATION

(11) **EP 4 556 319 A1**
(43) Date of publication of application: **21.05.2025**
(21) Application number: 24792094.5
(22) Date of filing: 18.04.2024
(51) Int. Cl.: B60R 21/213, B60R 13/02, B60Q 3/51

(54) **ROOF FIXING STRUCTURE AND VEHICLE**

(30) Priority: 21.04.2023 CN 202320953452 U; 21.04.2023 CN 202310453270; 21.04.2023 CN 202310452104
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: CHANG, Zhihao, Ningbo, Zhejiang 315899 (CN); XU, Yun, Ningbo, Zhejiang 315899 (CN); LI, Guolin, Ningbo, Zhejiang 315899 (CN); CHEN, Hongqiang, Ningbo, Zhejiang 315899 (CN); LI, Lianlei, Ningbo, Zhejiang 315899 (CN); LIU, Deli, Ningbo, Zhejiang 315899 (CN)
(74) Representative: Osterhoff, Utz
(86) International application number: PCT/CN2024/088659
(87) International publication number: WO 2024/217509

(57) **Abstract**

The present application provides a roof panel assembly fixing structure and a vehicle, relates to the technical filed of automobiles. The roof panel assembly fixing structure includes: a roof panel assembly provided at the inner side of the body side inner plate; an upper pillar panel assembly provided at the inner side of the body side inner plate; and an inflatable curtain provided between the body side inner plate and a side wall of the roof panel assembly. An end of the side wall of the roof panel assembly is connected to a top end of the upper pillar panel assembly, and the roof panel assembly and the upper pillar panel assembly are configured such that when the end of the side wall of the roof panel assembly is displaced toward a vehicle due to an impact of the inflatable curtain, the top end of the upper pillar panel assembly is configured to avoid a displacement path of the end of the side wall of the roof panel assembly. By docking the side wall end of the roof panel assembly with the top of the upper pillar panel assembly, the roof panel assembly can be displaced into the vehicle without hindrance when the inflatable curtain explodes, thereby guiding the inflatable curtain to be smoothly deployed when it explodes while ensuring its own strength with a simple structure, and avoiding the inner panel of the pillar and some parts of the roof panel assembly from breaking and falling off due to collision when the air curtain explodes.

## Description

### TECHNICAL FIELD

The present disclosure relates to the technical field of automobiles, and in particular to a roof panel assembly fixing structure and a vehicle.

### BACKGROUND

Currently, airbags are widely utilized in automobiles. In addition to airbags on the dashboard, many vehicles are also equipped with side airbags to enhance passenger safety during a side collision. Side airbags are generally positioned at the connection between the side panel and the roof panel assembly. Upon a lateral collision, the side airbags deploy and unfold downward, creating a cushioning barrier between passengers and the side panel.

Since side curtain airbags must deploy downward immediately upon activation, a side curtain airbag guide structure is generally installed beneath the airbags. This guide structure directs the deployment path of the side curtain airbags, allowing them to pass through the roof panel assembly area to protect passenger safety. However, existing guide structures can detach easily upon airbag deployment, potentially causing harm to passengers.

Accordingly, there is a need for a roof panel assembly fixing structure and vehicle design to address the aforementioned issues.

### SUMMARY

In view of the above shortcomings of the related art, the present application provides a roof fixing structure to solve the technical problem in the related art that the roof fixing structure is easily disintegrated and fallen off when the side air curtain explodes through the roof.

To achieve the above-mentioned objective and other related objectives, the present application provides a roof panel assembly fixing structure, including: a roof panel assembly, provided at an inner side of a body side inner plate; an upper pillar panel assembly, provided at the inner side of the body side inner plate; and an inflatable curtain, provided between the body side inner plate and a side wall of the roof panel assembly. An end of the side wall of the roof panel assembly is connected to a top end of the upper pillar panel assembly, and the roof panel assembly and the upper pillar panel assembly are configured such that when the end of the side wall of the roof panel assembly is displaced toward a vehicle due to an impact of the inflatable curtain, the top end of the upper pillar panel assembly is configured to avoid a displacement path of the end of the side wall of the roof panel assembly.

In an embodiment of the present application, a clamping groove is provided at the top end of the pillar inner plate, the clamping groove is recessed toward an inner edge of the pillar inner plate, and the end of the side wall of the roof is engaged within the clamping groove.

In an embodiment of the present application, a docking plate is provided at the end of the side wall of the roof, the docking plate is engaged and fitted on an inner wall of a side of the clamping groove connected to the pillar inner plate.

In an embodiment of the present application, a limiting structure is provided between the docking plate and the clamping groove, the limiting structure is configured to restrict a relative displacement of the docking plate and the clamping groove.

In an embodiment of the present application, the limiting structure includes a guide groove and a connector, the guide groove is provided at an inner wall of a side of the clamping groove, the guide groove is configured to extend from a surface of the inner wall to a bottom of the clamping groove, an opening of the guide groove is provided at an outer edge of the clamping groove facing an inside of the vehicle; and the connector is provided at the docking plate and configured to slide within and be clamped by the guide groove.

In an embodiment of the present application, the roof includes a double-layer structure.

In an embodiment of the present application, a guide plate is provided at the top of the pillar inner plate, the guide plate is connected to an upper of the clamping groove, the guide plate is configured to extend from the pillar inner plate toward the side of the body side wall, and an extended end of the guide plate is inserted into the body side wall.

In an embodiment of the present application, the extended end of the guide plate is inserted into an insertion groove of the body side wall, and an end of the guide plate is provided with felt.

In an embodiment of the present application, the guide plate and the side wall of the roof are configured to form a V-shaped groove.

In an embodiment of the present application, a plurality of functional component installation ports are provided at the roof; the roof further includes: a plurality of reinforcement frames installed at the roof, and each of the reinforcement frames is provided around a corresponding functional component installation port. The shape of each of the reinforcement frames is adapted to the shape of the functional component installation port.

In an embodiment of the present application, a plurality of elastic pads are provided along an edge of the roof, the plurality of the elastic pads are symmetrically bonded to both side edges of the roof, and each elastic pad having a same length.

In an embodiment of the present application, a roof screen installation port is opened at the roof, the roof screen installation port is located between two functional component installation ports, and both sides of the roof screen installation port are installed with reinforcement bridges, a central axis of the roof screen installation port coincides with central axes of the two adjacent functional component installation ports, and the reinforcement bridges are distributed along both sides of the central axis of the roof screen installation port.

In an embodiment of the present application, the roof is provided with a hollow area, and the roof fixing structure further includes: an ambient light bracket attached to an upper side of the roof, the ambient light bracket is provided along an edge of the hollow area, and a part of the ambient light bracket structure is exposed within the hollow area; and an ambient light panel located at a lower side of the roof, the ambient light panel is connected to the ambient light bracket in the hollow area through a connecting piece.

In an embodiment of the present application, the connecting piece includes a threaded connecting member and an elastic clip, the threaded connecting member and the elastic clip are respectively surrounded around an edge of the ambient light panel.

The present disclosure further provides a vehicle, including: the roof panel assembly fixing structure described above.

According to the roof fixing structure and the vehicle of the present application, by docking the end of the roof side wall with the top of the pillar inner plate, the roof can be moved into the vehicle without hindrance when the side air curtain explodes, thereby ensuring its own strength with a simple structure while guiding the side air curtain to be smoothly deployed when it explodes, and preventing the pillar inner plate and some parts of the roof from breaking and falling off due to collision when the air curtain explodes. Therefore, the present application effectively overcomes some practical problems in the related art and has high utilization value and use significance.

### BRIEF DESCRIPTION OF THE DRAWINGS

In order to more clearly illustrate the technical solutions in the embodiments of the present disclosure, drawings used in the embodiments will be briefly described below. the drawings in the following description are only some embodiments of the present disclosure. It will be apparent to those skilled in the art that other figures can be obtained according to the structures shown in the drawings without creative work.
FIG. 1 is a three-dimensional view of a roof panel assembly fixing structure according to an embodiment of the present disclosure.
FIG. 2 is a structural side view of the roof panel assembly fixing structure according to an embodiment of the present disclosure.
FIG. 3 is another structural side view of the roof panel assembly fixing structure according to an embodiment of the present disclosure.
FIG. 4 is a schematic structural view of an interior roof panel assembly of a vehicle according to an embodiment of the present disclosure.
FIG. 5 is a schematic structural view of an outer side roof panel assembly of a vehicle according to an embodiment of the present disclosure.
FIG. 6 is a schematic structural view of a roof panel assembly from another angle on the outside of a vehicle according to an embodiment of the present disclosure.
FIG. 7 is a schematic structural view of a material of the roof panel assembly according to an embodiment of the present disclosure.
FIG. 8 is a schematic structural view of the roof panel assembly according to an embodiment of the present disclosure.
FIG. 9 is a bottom view of the roof panel assembly shown in FIG. 8.
FIG. 10 is a schematic structural view of FIG. 9 after installing an ambient light panel.
FIG. 11 is a schematic structural view of an ambient light panel fixing structure according to an embodiment of the present disclosure.
FIG. 12 is a schematic structural view of an ambient light panel according to an embodiment of the present disclosure.
FIG. 13 is a schematic structural view of the ambient light panel from another angle according to an embodiment of the present disclosure.
FIG. 14 is a partial enlarged view of the ambient light panel according to an embodiment of the present disclosure.
FIG. 15 is a schematic structural view of a double-sided elastic clip according to an embodiment of the present disclosure.
FIG. 16 is a schematic structural view of a connection between the double-sided elastic clip and an ambient light bracket according to an embodiment of the present disclosure.
FIG. 17 is a schematic structural view of the connection between a single-sided elastic clip and the ambient light bracket according to an embodiment of the present disclosure.
FIG. 18 is a schematic structural view of a self-tapping screw according to an embodiment of the present disclosure.
FIG. 19 is a schematic structural view showing the connection between the self-tapping screw and the ambient light bracket according to an embodiment of the present disclosure.
FIG. 20 is a schematic structural view of a shielding frame and the ambient light bracket according to an embodiment of the present disclosure.

The realization of the purpose, functional features and advantages of the present disclosure will be further described with reference to the embodiments and the accompanying drawings.

Description of reference signs:

| Reference sign | Name | Reference sign | Name |
|---|---|---|---|
| 1100 | upper pillar panel assembly | 2101 | glass fiber |
| 1110 | guide plate | 2102 | adhesive |
| 1120 | clamping groove | 2103 | polyurethane foam sheet |
| 1200 | roof panel assembly | 2110 | first non-woven fabric layer |
| 1210 | docking plate | 2120 | first polyurethane substrate layer |
| 1300 | inflatable curtain | 2130 | second polyurethane substrate layer |
| 1400 | body side inner plate | 2140 | second non-woven fabric layer |
| 1410 | insertion groove | 2150 | fabric layer |
| 2200 | reinforcement frame | 2210 | rear sunroof installation port |
| 2220 | speaker installation port | 2230 | front sunroof installation port |
| 2240 | front dome light installation port | 2250 | ambient light installation port |
| 2260 | microphone installation port | 2300 | roof screen installation port |
| 2400 | elastic pad | 2500 | reinforcement bridge |
| 2600 | sound-absorbing cotton | 2700 | fixing bracket |
| 3110 | hollow area | 3130 | reading lamp |
| 3140 | air vent | 3200 | ambient light bracket |
| 3210 | panel installation part | 3220 | bending part |
| 3230 | extension surface | 3240 | connection surface |
| 3300 | ambient light panel | 3310 | lamp shell |
| 3311 | luminous body | 3320 | back shell |
| 3330 | integrated installation hole | 3410 | threaded connector |
| 3420 | elastic clip | 3421 | single-sided elastic clip |
| 3422 | double-sided elastic clip | 34221 | first double-sided elastic clip |
| 34222 | second double-sided elastic clip | 3423 | elastic claw |
| 3500 | inflatable curtain generator | 3600 | shielding frame |

The realization of the purpose, functional features and advantages of the present application will be further described with reference to the embodiments and the accompanying drawings.

### DETAILED DESCRIPTION OF THE EMBODIMENTS

The embodiments of the present disclosure will be described in detail below through specific examples, and those skilled in the art can readily understand other advantages and effects of the present disclosure based on the content disclosed herein. The present disclosure may also be implemented or applied in other different embodiments, and the details herein may be modified or altered according to various perspectives and applications without departing from the spirit of the present disclosure. It should be noted that features in the following embodiments and examples may be combined with each other provided there is no conflict. Furthermore, the terminology used in the embodiments of the present disclosure is intended to describe specific examples and not to limit the scope of the present disclosure. The test methods for which specific conditions are not indicated in the following examples are generally conducted according to conventional conditions or according to the conditions recommended by each manufacturer.

When a numerical range is provided in an embodiment, it should be understood that, unless otherwise specified, both endpoints of the numerical range and any value between them are selectable. Unless otherwise defined, all technical and scientific terms used in this disclosure have the meanings commonly understood by those skilled in the art, and any similar or equivalent methods, devices, or materials of the prior art described in this application may be used in implementing the present disclosure.

**It** should be noted that directional terms such as "upper", "lower", "left", "right", "middle", and "one" cited in this specification are for convenience of description only and are not intended to limit the scope of implementation of this disclosure. Adjustments to these relative positional terms should be considered within the scope of the present disclosure, provided that the technical content remains substantially unchanged.

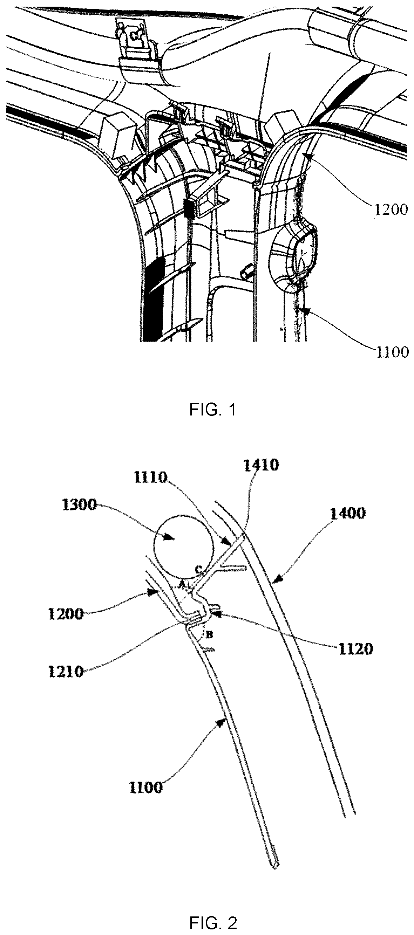

As shown in FIG. 1 to FIG. 3, the present disclosure provides a roof panel assembly fixing structure and a vehicle, in which an integrally designed clamping groove 1120 and a guide plate 1110 are provided at the connection between the upper pillar panel assembly 1100 and the side wall of the roof panel assembly 1200, so as to realize the setting of the guide plate 1110 on the upper pillar panel assembly 1100 and increase the overlap area between the side wall of the roof panel assembly 1200 and the inner wall of the pillar, thereby smoothly guiding the inflatable curtain 1300 to detonate and unfold through the roof panel assembly 1200 while ensuring that the roof panel assembly 1200 and connecting accessories will not fall off.

As shown in FIG. 1 to FIG. 3, the present disclosure provides a roof panel assembly fixing structure, which includes an upper pillar panel assembly 1100 and a roof panel assembly 1200.

As shown in FIG. 1 to FIG. 3, in the roof panel assembly fixing structure, the upper pillar panel assembly 1100 and the roof panel assembly 1200 are installed on the side of the body side inner plate 1400 facing the interior of the vehicle, the upper pillar panel assembly 1100 and the body side inner plate 1400 extend from the bottom of the vehicle body to the top of the vehicle body, the side wall of the roof panel assembly 1200 is connected to the top of the upper pillar panel assembly 1100, and the side wall of the roof panel assembly 1200 is further provided opposite to the body side inner plate 1400 above the upper pillar panel assembly 1100.

An inflatable curtain 1300 is further provided between the body side inner plate 1400 and the side wall of the roof panel assembly 1200. When the inflatable curtain 1300 is detonated and deployed into the vehicle, the side wall of the roof panel assembly 1200 is displaced into the vehicle under the impact of the inflatable curtain 1300, and since the end of the side wall of the roof panel assembly 1200 is butted against the top of the upper pillar panel assembly 1100, the top of the upper pillar panel assembly 1100 can avoid the displacement path of the end of the side wall of the roof panel assembly 1200, so the end of the side wall of the roof panel assembly 1200 will not be hindered by the upper pillar panel assembly 1100 during the displacement process, thereby ensuring that the inflatable curtain 1300 is deployed from the roof panel assembly 1200 into the vehicle while preventing the upper pillar panel assembly 1100 and some parts of the roof panel assembly 1200 from breaking and falling off due to collision.

It should be noted that the docking relationship between the top end of the upper pillar panel assembly 1100 and the end of the side wall of the roof panel assembly 1200 can be any sliding fitting structure, and the sliding fitting structure can be a plane fitting structure or a curved fitting structure. For example, the top end of the upper pillar panel assembly 1100 and the end of the side wall of the roof panel assembly 1200 are docked and fitted through two matching flat plates.

As shown in FIG. 1 to FIG. 3, a guide plate 1110 is further provided at the top of the upper pillar panel assembly 1100. The guide plate 1110 extends from the upper pillar panel assembly 1100 to the side of the body side inner plate 1400. The guide plate 1110 is curved. The inflatable curtain 1300 abuts on the guide surface of the guide plate 1110 between the body side inner plate 1400 and the side wall of the roof panel assembly 1200. When the inflatable curtain 1300 is not detonated, it is supported by the guide plate 1110 and stably provided between the side wall of the roof panel assembly 1200 and the body side inner plate 1400. When the inflatable curtain 1300 is detonated, it can be guided by the guide plate 1110 to move and impact the overlap between the side wall of the roof panel assembly 1200 and the upper pillar panel assembly 1100, and then the explosion pushes the side wall of the roof panel assembly 1200 into the vehicle to deploy to cushion and protect the head of the occupant in the vehicle. The extended end of the guide plate 1110 is inserted into the body side inner plate 1400 to strengthen the structural strength of the guide plate 1110 between the body side inner plate 1400 and the upper pillar panel assembly 1100, and prevent the inflatable curtain 1300 bag carried by the guide plate 1110 from falling off from the roof panel assembly 1200 when not deployed.

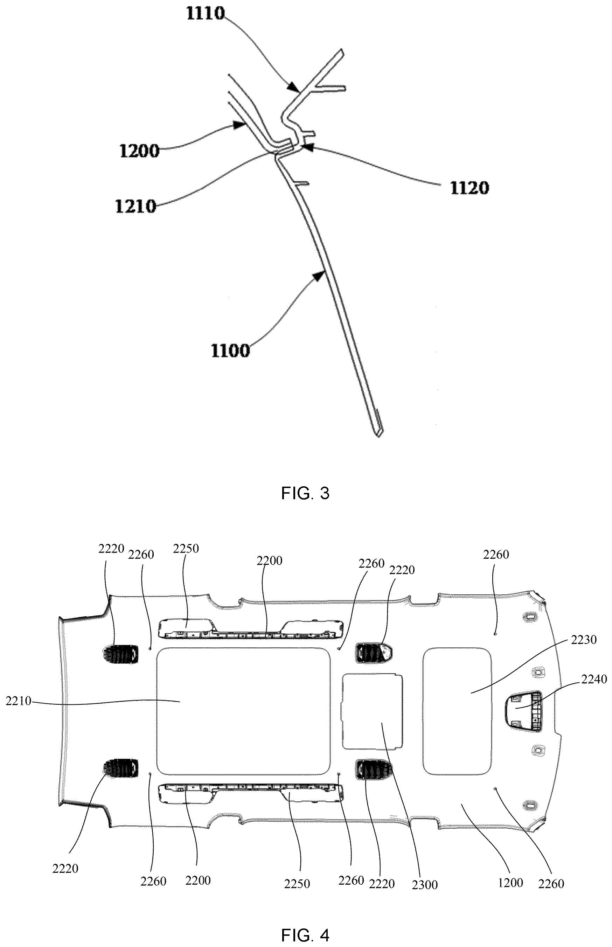

As shown in FIG. 2 and FIG. 3, a clamping groove 1120 is further provided at the top of the upper pillar panel assembly 1100. The clamping groove 1120 is located at the connection position between the guide plate 1110 and the upper pillar panel assembly 1100, and one end of the guide plate 1110 is connected to the upper side of the clamping groove 1120. The clamping groove 1120 is recessed toward the inner edge of the upper pillar panel assembly 1100, the clamping groove 1120 at the relative position between the upper pillar panel assembly 1100 and the body side 300 is recessed toward the body side 300. The end of the side wall of the roof panel assembly 1200 is overlapped in the clamping groove 1120. This connection manner can increase the overlap area of the roof panel assembly 1200 and the upper pillar panel assembly 1100, and enhance the overlap strength of the side wall of the roof panel assembly 1200 and the upper pillar panel assembly 1100, thereby avoiding damage to the structure of the upper pillar panel assembly 1100 when the side wall of the roof panel assembly 1200 is overlapped.

In an embodiment, as shown in FIG. 2 and FIG. 3, the inner wall on one side of the clamping groove 1120 is connected to the upper pillar panel assembly 1100, and extends from the connection of the upper pillar panel assembly 1100 to the inner edge of the upper pillar panel assembly 1100. The inner wall on the other side of the clamping groove 1120 can be set as a guide plate 1110, or connected to the guide plate 1110; for example, one end of the inner wall on the other side of the clamping groove 1120 is connected to the guide plate 1110, and the other end of the inner wall on the other side of the clamping groove 1120 extends to the side of the vehicle body side inner plate 1400 and is connected to the bottom of the clamping groove 1120.

A docking plate 1210 is provided at the end of the side wall of the roof panel assembly 1200. The shape of the docking plate 1210 matches the clamping groove 1120. The docking plate 1210 extends toward the inner edge of the upper pillar panel assembly 1100 at the end of the side wall of the roof panel assembly 1200 corresponding to the clamping groove 1120. When the side wall of the roof panel assembly 1200 is installed on the upper pillar panel assembly 1100, the side wall of the roof panel assembly 1200 can be overlapped in the card slot 1120 of the upper pillar panel assembly 1100 through the docking plate 1210 at the end. In an embodiment, the docking plate 1210 at the end of the side wall of the roof panel assembly 1200 is docked on the inner wall of the card slot 1120 on the side connected to the upper pillar panel assembly 1100. The end of the side wall of the roof panel assembly 1200 increases the docking area with the upper pillar panel assembly 1100 through the fit between the docking plate 1210 and the inner wall of the card slot 1120, thereby enhancing the docking strength between the side wall of the roof panel assembly 1200 and the upper pillar panel assembly 1100.

In addition, since the docking plate 1210 and the clamping groove 1120 extend in the same direction as the body side inner plate 1400, setting a suitable angle between the mating surface of the docking plate 1210 and the clamping groove 1120 and the upper pillar panel assembly 1100 can reduce the overlap slope and enhance the stability of the overlap. For example, in an embodiment of the present disclosure, the angle B between the inner wall of the clamping groove 1120 connected to one side of the upper pillar panel assembly 1100 and the upper pillar panel assembly 1100 is 60° to 120°, for example, the angle B can be 60°, 70°, 80°, 90°, 100°, 110° or 120°.

As shown in FIG. 2, in an embodiment of the present disclosure, the extended end of the guide plate 1110 is inserted into the insertion groove 1410 on the inner wall of the body side inner plate 1400. The extended end of the guide plate 1110 is provided with a felt, and the felt is coated on the extended end of the guide plate 1110 by bonding. When the extended end of the guide plate 1110 is inserted into the insertion groove 1410 of the body side inner plate 1400, the felt coated on the end of the guide plate 1110 is inserted into the insertion groove 1410 along with the guide plate 1110, and the felt is provided in the insertion groove 1410 between the end of the guide plate 1110 and the inner wall of the insertion groove 1410 to isolate the vibration transmission between the body side plate and the guide plate 1110, and avoid the resonance noise between the guide plate 1110 and the body side plate.

As shown in FIG. 2, in an embodiment of the present disclosure, the guide plate 1110 and the side wall of the roof panel assembly 1200 are provided at an angle to form a V-shaped groove. The V-shaped groove structure between the guide plate 1110 and the side wall of the roof panel assembly 1200 can guide the inflatable curtain 1300 to explode from the overlap of the upper pillar panel assembly 1100 and the side wall of the roof panel assembly 1200 along the guide direction C of the slope when the inflatable curtain 1300 is detonated, thereby pushing the side wall of the roof panel assembly 1200 overlapped on the upper pillar panel assembly 1100 to unfold on the inner side of the vehicle body. The angle A of the V-shaped groove between the guide plate 1110 and the side wall of the roof panel assembly 1200 may not be limited. In some embodiments, the angle A between the guide plate 1110 and the side wall of the roof panel assembly 1200 is 40° to 90° to increase the slope of the guide plate 1110 relative to the side wall of the roof panel assembly 1200. For example, the angle A can be 40°, 50°, 60°, 70°, 80° or 90°.

In addition, in an embodiment of the present disclosure, a limiting structure is provided between the docking plate 1210 and the clamping groove 1120, and the limiting structure limits the sliding between the docking plate 1210 and the clamping groove 1120. For example, the limiting structure limits the displacement of the docking plate 1210 sliding toward the body side inner plate 1400 relative to the clamping groove 1120 by the overlapping surface of the docking plate 1210 and the clamping groove 1120, and does not limit the displacement of the docking plate 1210 sliding away from the clamping groove 1120 toward the vehicle interior. The sliding direction toward the body side inner plate 1400 is the direction in which the docking plate 1210 slides into the clamping groove 1120, that is, the direction in which the inner wall of the clamping groove 1120 connected to the upper pillar panel assembly 1100 extends toward the body side inner plate 1400.

In an embodiment, the limiting structure includes a guide groove and a connector, the guide groove is provided on the inner wall of the side where the clamping groove 1120 overlaps with the docking plate 1210, and the connector is protrudingly provided at the bottom of the docking plate 1210, and the shape of the connector matches the guide groove. The guide groove is provided as an open groove body on the inner wall surface, and the opening at one end of the guide groove is provided on the outer edge of the inner wall of the clamping groove 1120 facing the inner side of the vehicle. The guide groove extends from the inner wall surface of the clamping groove 1120 to the bottom side of the clamping groove 1120, and the bottom of the groove body of the guide groove faces the side of the vehicle body side inner plate 1400. When the docking plate 1210 is overlapped in the clamping groove 1120, the connector at the bottom of the docking plate 1210 is pressed into the guide groove on the inner wall of the clamping groove 1120. The guide groove can guide the connector to slide in the groove body. The guide groove can limit the sliding of the docking plate 1210 toward the side of the vehicle body side inner plate 1400 through the bottom of the groove body, and further guide the sliding of the docking plate 1210 toward the inside of the vehicle.

In an embodiment of the present disclosure, the plate body of the roof panel assembly 1200 includes a double-layer structure. The plate body of the roof panel assembly 1200 is provided with a double-layer structure, and the double-layer structure includes a fabric layer and a substrate layer. The fabric layer is located on the side of the roof panel assembly 1200 facing the inside of the vehicle, and the substrate layer is provided on the fabric layer by high-pressure gluing on the side away from the inside of the vehicle. The fabric layer is provided with fabric and a first foam sheet in sequence from the inside of the vehicle to the outside of the vehicle, and the first foam sheet is glued to the fabric. The material of the fabric can be knitted, suedette or polyvinyl chloride (PVC), etc. The first foam sheet is a back flame composite foam sheet. The substrate layer is glued to the fabric layer in sequence from the inside of the vehicle to the outside of the vehicle with a first glass felt, a second foam sheet, a second glass felt, a third foam sheet, a third glass felt and a non-woven fabric, and the second foam sheet and the third foam sheet can be polyurethane (PU) foam sheets. The double-layer structure enhances the basic strength of the roof panel assembly 1200, solves the problem of insufficient strength of the double skylights of the roof panel assembly 1200 with integrated complex parts, and the problem of easy deformation of the integrated rubber strip area of the roof panel assembly 1200 when pressed.

As a functional part with a large visible area in the vehicle body, the roof panel assembly 1200 can integrate multiple components. However, the more components are integrated, the longer the roof panel assembly 1200 becomes. For a long roof panel assembly 1200, how to ensure the strength of the roof panel assembly 1200 so that it will not break or deform during transportation and installation has become a problem that needs to be solved urgently.

As shown in FIG. 4, which is a schematic structural view of an interior roof panel assembly of a vehicle according to an embodiment of the present disclosure, solving the problem that a long roof panel assembly 1200 is prone to bending during transportation when multiple functional component installation ports of different sizes are provided on it. The overall strength of the roof panel assembly 1200 is improved, so that the roof panel assembly 1200 is not easily bent or damaged during the entire process of transportation, packaging, and installation, thereby extending the service life of the roof panel assembly 1200.

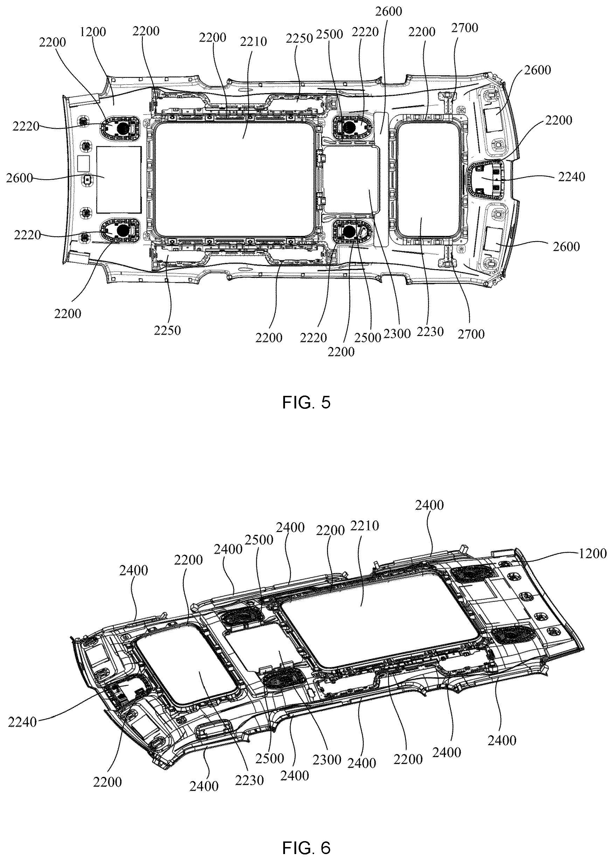

As shown in FIG. 4 and FIG. 5, FIG. 5 shows a schematic structural view of an outer side roof panel assembly of a vehicle according to an embodiment of the present disclosure. The roof panel assembly 1200 is an approximately rectangular structure and has a certain curvature after being assembled to the roof panel assembly 1200. A plurality of functional component installation ports are provided on the roof panel assembly 1200, and corresponding functional components (not shown in the figure) are installed in each functional component installation port to fully meet the various needs of users. In an embodiment, the roof panel assembly 1200 is provided with functional component installation ports such as the front roof panel assembly light installation port 2240, the front sunroof installation port 2230, and the rear sunroof installation port 2210, and corresponding ambient light installation ports 2250 are provided on both sides of the rear sunroof installation port 2210 to integrate and install components such as the ambient light (not shown in the figure), the reading lamp (not shown in the figure) and the air vent (not shown in the figure).

In another embodiment of the present disclosure, the ambient light installation port 2250 is a hollow area 3110 provided on the roof panel assembly 1200. Furthermore, in order to provide a more comfortable environment for the passengers in the vehicle, sunshades (not shown in the figure) are respectively installed on the front sunroof installation port 2230 and the rear sunroof installation port 2210 to effectively block the sunlight, and a speaker installation port 2220 and a microphone installation port 2260 are opened at the edge of the rear sunroof installation port 2210. A plurality of reinforcement frames 2200 are installed on the roof panel assembly 1200, and each reinforcement frame 2200 is respectively provided around the corresponding functional component installation port, the shape of each reinforcement frame 2200 is adapted to the shape of the corresponding functional component installation port. Hot melt adhesive can be sprayed on the side of the reinforcement frame 2200 facing the roof panel assembly 1200, and the reinforcement frame 2200 can be stamped and hot-melted to the side of the roof panel assembly 1200 facing the roof panel assembly sheet metal (not shown in the figure). Through this strong pressure and adhesive force, the firmness of the reinforcement frame 2200 on the roof panel assembly 1200 is effectively guaranteed, so that the reinforcement frame 2200 is not easy to detach from the roof panel assembly 1200, which greatly improves the safety of the vehicle. Especially for a long vehicle roof panel assembly 1200 with many functional parts installation ports, it is very easy to bend during transportation and installation. Therefore, by arranging the reinforcement frame 2200 at each functional part installation port, the rigidity of the vehicle roof panel assembly 1200 as a whole is enhanced, and the bending of the roof panel assembly 1200 is effectively reduced.

It will be understood that the functional parts described in this embodiment include but are not limited to the front roof panel assembly lights, front sunroofs and their sunshades, rear sunroofs and their sunshades, ambient lights and speakers. Those skilled in the art may adaptively add or delete corresponding functional parts according to the actual needs of the vehicle, which is not limited here.

As shown in FIG. 4 and FIG. 5, in an embodiment of the present disclosure, the reinforcement frame 2200 is an iron reinforcement frame 2200. Compared with plastic materials, the iron reinforcement frame 2200 has good rigidity and is not easy to deform. When encountering extreme weather such as extreme cold or extreme heat, the iron reinforcement frame 2200 will not expand and contract at this temperature to prevent the vehicle roof panel assembly 1200 from expanding and contracting due to the thermal expansion and contraction of the reinforcement frame 2200, causing the fabric of the vehicle roof panel assembly 1200 to wrinkle on the side of the vehicle interior. In addition, by arranging an iron reinforcement frame 2200 at each functional component installation port, the vehicle roof panel assembly 1200 can be hung on the wall through the reinforcement frame 2200 during the storage of the vehicle roof panel assembly 1200, reducing the floor space of the vehicle roof panel assembly 1200, and the reinforcement frame 2200 can withstand a large suspension force to prevent the vehicle roof panel assembly 1200 from deforming during the suspension process. By installing an iron reinforcement frame 2200 at each functional component installation port, the roof panel assembly 1200 is effectively prevented from breaking during the whole process of packaging, handling and installation, and the rigidity of the roof panel assembly 1200 is improved.

Furthermore, in an embodiment of the present disclosure, the reinforcement frame 2200 is a thickened reinforcement frame 2200. The thickness of the reinforcement frame 2200 is thickened from the original 0.7 mm to 0.8 mm. By thickening the reinforcement frame 2200, the rigidity of the reinforcement frame 2200 can be further improved, thereby improving the overall rigidity of the vehicle roof panel assembly 1200, and avoiding the problem of deformation of the reinforcement frame 2200 during the stamping production process when the reinforcement frame 2200 is thin.

As shown in FIG. 4 to FIG. 6, FIG. 6 shows a schematic structural view of a roof panel assembly from another angle on the outside of a vehicle according to an embodiment of the present disclosure. Considering that in actual use, when someone is outside the vehicle and presses the edge of the roof panel assembly 1200, it is easy to cause the roof panel assembly 1200 to be concave and deformed (i.e., from the inside of the vehicle, the roof panel assembly 1200 is concave in the direction of the roof panel assembly 1200 at the pressing position), which leads to the formation of a gap between the concave position and the sealing strip (not shown in the figure) beside it. Not only does it greatly reduce the overall aesthetics of the vehicle, but it also causes foreign matters such as rainwater or dust to enter the vehicle along the gap formed between the sealing strip and the concave position, destroying the sealing of the vehicle and causing pollution to the environment inside the vehicle. In order to avoid this situation, in an embodiment of the present disclosure, a plurality of elastic pads 2400 are provided along the edge of the roof panel assembly 1200. The elastic pad 2400 is in the shape of a long strip, and a plurality of elastic pads 2400 are provided around the edge of the roof panel assembly 1200 facing the roof panel assembly sheet metal side. It should be noted that, compared with the small elastic pads in existing vehicles, the elastic pads 2400 described in the present disclosure have a longer length. When the user presses the edge of the roof panel assembly 1200, the elastic pads 2400 at the pressing position can play a buffering role to prevent the roof panel assembly 1200 from being sunken and deformed at the pressing position. This effectively extends the service life of the roof panel assembly 1200, improves the overall aesthetics of the vehicle, effectively blocks foreign matters such as dust and rain from entering, creates a clean driving environment for the passengers in the vehicle, and improves the overall comfort of the vehicle.

As shown in FIG. 4 to FIG. 6, in order to effectively solve the problem of soft pressing between the edge of the roof panel assembly 1200 and the sealing strip, the elastic pad 2400 should have a certain hardness and resilience. In an embodiment of the present disclosure, the specifications of the elastic pad 2400 is 20*20*360mm (that is, the thickness, width and length of the elastic pad 2400 along the edge of the roof panel assembly 1200 are 20mm, 20mm, and 360mm respectively), and the material is polyethylene. The density of the elastic pad 2400 is 45kg/m³, the elastic pad 2400 with a density higher than this density has a high hardness. When the inflatable curtain (not shown in the figure) explodes, the elastic pad fragments formed will splash into the car. Once it hits the occupants in the car, it will seriously endanger the personal safety of the occupants in the car. The elastic pad 2400 with a density lower than this density cannot effectively support and buffer the roof panel assembly 1200 due to its too soft hardness. It is understandable that the length of the elastic pad 2400 can be adaptively adjusted according to the length of the roof panel assembly 1200, which is not limited here. It should be further explained that the material of the elastic pad 2400 described in the present disclosure can also be any other material with certain elasticity and retraction force, such as polyurethane, etc., which is not limited here. The elastic pad 2400 described in the present disclosure does not excessively pursue high-density materials, so the cost is relatively low. It can not only play an effective supporting role when the user presses, protecting the edge of the roof panel assembly 1200 from deformation, but also will not hurt the occupants in the car when the inflatable curtain explodes, effectively saving the production cost of the enterprise and facilitating quantitative production. Further, in order to save production processes and improve production efficiency, in an embodiment of the present disclosure, the lengths of the multiple elastic pads 2400 are identical. In actual production, a whole elastic pad strip after processing can be equidistantly cut into multiple elastic pads 2400 of the same length, thereby saving the production cost of the enterprise and greatly improving production efficiency.

As shown in FIG. 4 to FIG. 6, in an embodiment of the present disclosure, a plurality of elastic pads 2400 are symmetrically bonded to the edges of both sides of the roof panel assembly 1200. The quantity of elastic pads 2400 is even, which are symmetrically installed on both sides of the roof panel assembly 1200 and are attached to the edge between the front of the roof panel assembly 1200 and the B-pillar, the edge between the B-pillar and the C-pillar, and the edge between the C-pillar and the rear of the roof panel assembly 1200. That is, the elastic pads 2400 are provided on the edge of the roof panel assembly 1200 and are relatively located on the upper side of the side window (not shown in the figure), thereby effectively preventing the user located outside the vehicle from pressing the roof panel assembly 1200 upward through the side window to cause it to be concave and deformed.

In another embodiment of the present disclosure, the elastic pads 2400 are not provided on the edge of the roof panel assembly 1200 near the B-pillar and the C-pillar. This is because the edge of the roof panel assembly 1200 forms a curved surface with a certain curvature near the B-pillar and the C-pillar. Because the curved surface has a large curvature and good strength, the edge of the roof panel assembly 1200 is not easy to sag when subjected to external force. In order to save the resources of the elastic pad 2400, and considering that the elastic pad 2400 with a curved shape is difficult to produce, the elastic pad 2400 is only bonded to the relatively straight edge of the roof panel assembly 1200, which can effectively support the roof panel assembly 1200 and prevent the edge of the roof panel assembly 1200 from being dented and deformed under external force.

As shown in FIG. 4 to FIG. 6, in an embodiment of the present disclosure, a roof screen installation port 2300 is further provided on the roof panel assembly 1200. The roof screen installation port 2300 is located between the two functional component installation ports, and reinforcement bridges 2500 are installed on both sides of the roof screen installation port 2300. A roof screen installation port 2300 is provided between the front sunroof installation port 2230 and the rear sunroof installation port 2210 for installing a roof screen for users to watch various video programs. In an embodiment of the present disclosure, the central axis of the roof screen installation port 2300 coincides with the central axis of the two adjacent functional component installation ports, and the reinforcement bridges 2500 are distributed on both sides of the roof screen installation port 2300 along the central axis of the roof screen installation port 2300. Since the front sunroof installation port 2230, the rear sunroof installation port 2210 and the roof screen installation port 2300 are all rectangular, and along the length direction of the roof panel assembly 1200, the central axis of the front sunroof installation port 2230, the central axis of the rear sunroof installation port 2210, and the central axis of the roof screen installation port 2300 coincide with each other. Therefore, in order to reinforce the roof screen installation port 2300, two reinforcement bridges 2500 can be symmetrically attached to both sides of the roof screen installation port 2300 along the central axis, and the reinforcement bridges 2500 are located on the side of the roof screen installation port 2300 facing the roof panel assembly sheet metal. When the roof screen is assembled to the roof screen installation port 2300, the reinforcement bridges 2500 on both sides can prevent the roof screen installation port 2300 from being excessively opened under the action of external force, resulting in deformation and other problems during the assembly process, and effectively enhance the rigidity of the roof panel assembly 1200.

As shown in FIG. 4 and FIG. 5, in an embodiment of the present disclosure, fixing brackets 2700 are installed on both sides of the front sunroof installation port 2230. The fixing brackets 2700 are installed on the side of the front sunroof installation port 2230 facing the roof panel assembly sheet metal. They are symmetrically distributed on both sides of the outer edge of the front sunroof installation port 2230 along the central axis of the front sunroof installation port 2230. The side of the fixing bracket 2700 facing the roof panel assembly 1200 is fixed to the roof panel assembly 1200 by hot melt stamping, and the side of the fixing bracket 2700 away from the roof panel assembly 1200 is fixed to the roof panel assembly sheet metal. Thereby, when the inflatable curtain explodes, the roof panel assembly 1200 is prevented from falling off, and the safety of the vehicle is enhanced. Furthermore, in order to save production costs, the fixing bracket 2700 and the corresponding reinforcement frame 2200 are provided independently of each other. Since the fixing bracket 2700 is relatively small, the remaining material after the reinforcement frame 2200 is stamped can be used to make the fixing bracket 2700. By independently providing the reinforcement frame 2200 on the front sunroof panel assembly 1200 installation port 2230 and the fixing brackets 2700 on both sides thereof, the stamping cost is saved and the production cost of the vehicle is reduced. In addition, this independent design allows only the corresponding damaged parts to be replaced when the fixing bracket 2700 or its corresponding reinforcement frame 2200 is damaged, without having to replace the entire part, which greatly improves the convenience of accessory replacement. Furthermore, in order to improve the sound absorption and sound insulation performance of the entire vehicle, in an embodiment of the present disclosure, sound-absorbing cotton 2600 is laid in the exposed area of the roof panel assembly 1200 where no functional parts are installed, so as to achieve a sound reduction effect by absorbing external sounds.

As shown in FIG. 4 to FIG. 7, FIG. 7 shows a schematic structural view of a material of the roof panel assembly according to an embodiment of the present disclosure. Since the vehicle roof panel assembly described in the present disclosure has a long length (about 3086 mm) and is an extra-long roof panel assembly, it is very easy to bend during transportation. In order to solve this problem, in another embodiment of the present disclosure, the structure of the roof panel assembly 1200 includes: a first non-woven fabric layer 2110, a first polyurethane substrate layer 2120, a second polyurethane substrate layer 2130, a second non-woven fabric layer 2140 and a fabric layer 2150. The first non-woven fabric layer 2110 is provided at the side of the roof panel assembly 1200 facing the roof panel assembly sheet metal. The first polyurethane substrate layer 2120 is bonded to the side of the first non-woven fabric layer 2110 away from the vehicle sheet metal. The second polyurethane substrate layer 2130 is provided at the side of the first polyurethane substrate layer 2120 away from the first non-woven fabric layer 2110. The second non-woven fabric layer 2140 is bonded to the side of the second polyurethane substrate layer 2130 away from the first polyurethane substrate layer 2120. The fabric layer 2150 is bonded to the side of the second non-woven fabric layer 2140 away from the second polyurethane substrate layer 2130. For an extra-long roof panel assembly with multiple functional parts integrated, since each functional part has a certain weight, a single-layer polyurethane substrate layer cannot bear too many functional parts, which can easily cause the roof panel assembly 1200 to break.

In order to carry more functional parts, a double-layer polyurethane substrate layer is required. In an embodiment of the present disclosure, the first polyurethane substrate layer 2120 includes glass fiber 2101, adhesive 2102, polyurethane foam sheet 2103, adhesive 2102 and glass fiber 2101 provided in sequence, and the second polyurethane substrate layer 2130 includes adhesive 2102, polyurethane foam sheet 2103, adhesive 2102 and glass fiber 2101 provided in sequence. During the driving process of the vehicle, especially on bumpy roads, there will be shaking between the structural parts of the roof panel assembly 1200. The double-layer polyurethane structure formed by the first polyurethane substrate layer 2120 and the second polyurethane substrate layer 2130 can ensure that the structural parts will not be damaged due to bumps. The upper and lower layers of the polyurethane foam sheet are coated with adhesive 2102, and the glass fiber 2101 is laid on the surface of the polyurethane foam sheet 2103 coated with adhesive 2102. After the numerous fine glass fibers 2101 are bonded to the surface of the polyurethane foam sheet 2103, an extremely thin glass fiber mat is formed to harden the polyurethane foam sheet 2103. Further, in order to reduce production costs, the glass fiber mat can also be directly obtained by general commercial means, and the glass fiber mat is adhered to both sides of the polyurethane foam sheet 2103 through the adhesive 2102. Those skilled in the art can select a suitable manner to prepare the first polyurethane substrate layer 2120 and the second polyurethane substrate layer 2130 according to actual needs, which is not required here. The adhesive 2102 can be any article with adhesive force, such as glue, rubber cement, etc. It should be noted that the roof panel assembly 1200 can further include three or more layers of polyurethane substrate layers, and can also be multiple layers of other materials. Those skilled in the art can adaptably select according to actual needs, which is not limited here.

It should be further explained that, since the glass fiber mat is formed by bonding glass fibers 2101 using an adhesive 2102, the glass fibers 2101 can be selected from long glass fibers or short glass fibers. When the glass fiber mat is made of short glass fibers of short length, the hardness of the glass fiber mat is harder due to the large number of short glass fibers interwoven per unit area during preparation. Correspondingly, when the glass fiber mat is made of long glass fibers of long length, the hardness of the glass fiber mat is soft due to the small number of long glass fibers interwoven per unit area during preparation. Therefore, long glass fibers and short glass fibers can affect the hardness of the prepared glass fiber mat, and those skilled in the art can adaptively select glass fibers of corresponding lengths according to the actual manufacturing requirements of the vehicle, which is not limited here.

As shown in FIG. 4 to FIG. 7, considering that the polyurethane foam sheet 2103 is relatively fluffy, if only the first polyurethane substrate layer 2120 and the second polyurethane substrate layer 2130 are stacked together, a large space inside the vehicle will be occupied. In order to avoid this situation, in an embodiment of the present disclosure, after the second polyurethane substrate layer 2130 is provided at the side of the first polyurethane substrate layer 2120 away from the first non-woven fabric layer 2110, it further includes: laminating the first polyurethane substrate layer 2120 and the second polyurethane substrate layer 2130. Through the laminating process, the space occupied by the polyurethane foam sheet 2103 can be further compressed, and finally the common thickness of the first polyurethane substrate layer 2120 and the second polyurethane substrate layer 2130 is almost the same as the thickness of the traditional single-layer polyurethane substrate layer. On the one hand, through the laminating process, the effect of compression and volume reduction is achieved, which greatly improves the utilization space inside the vehicle and provides a more comfortable riding environment for the passengers inside the vehicle. On the other hand, compared with the traditional single-layer polyurethane foam sheet, the density of the laminated polyurethane foam sheet 2103 is increased, which reduces the force of external sound penetrating into the car, greatly improving the Noise, Vibration, Harshness (NVH) performance of the vehicle.

Furthermore, by laminating the first polyurethane substrate layer 2120 and the second polyurethane substrate layer 2130, a double-layer polyurethane structure is formed, which has good sound insulation effect and excellent heat insulation effect, and can effectively block external heat from entering the car, which not only improves the overall rigidity of the vehicle roof panel assembly 1200, but also effectively improves the sound insulation and heat insulation performance of the vehicle. It creates a good driving environment for the passengers in the car and effectively improves the comfort of the drivers and passengers.

It should be noted that the vehicle roof panel assembly 1200 described in the present disclosure is an integrated structure, that is, when viewed from the direction of the vehicle roof panel assembly 1200 from the passengers in the vehicle, there are no traces of splicing. This design improves the overall aesthetics of the vehicle on the one hand, and makes the roof panel assembly 1200 more solid on the other.

It is understandable that, for the sake of illustration, the first non-woven fabric layer 2110 and the second non-woven fabric layer 2140 of the present disclosure are represented by different compositions, but the materials of the first non-woven fabric layer 2110 and the second non-woven fabric layer 2140 can be the same or different, and are not limited here. It should be further explained that, considering that the first non-woven fabric layer 2110 is close to the top of the vehicle and is adjacent to multiple components of the roof panel assembly 1200, when the vehicle is started or in a high temperature environment, the temperature of the components of the roof panel assembly 1200 is high. In order to prevent glue from seeping through the first non-woven fabric layer 2110, in an embodiment of the present disclosure, the density of the first non-woven fabric layer 2110 is greater than the density of the second non-woven fabric layer 120. Since the first non-woven fabric layer 2110 is often in a high temperature area, by increasing the density of the first non-woven fabric layer 2110, the overall fabric is made more compact and firmer. On the one hand, it is not easy to cause glue to seep out, and on the other hand, the high-density first non-woven fabric layer 2110 is not easy to deform under high temperature conditions, which effectively extends the service life. In addition, considering that the second non-woven fabric layer 2140 is formed on both sides by the fabric layer 2150 and the second polyurethane substrate layer 2130, the second non-woven fabric layer 2140 is not in direct contact with the components of the roof panel assembly 1200, and the greater the density of the material, the heavier its weight and the higher the cost. Considering the cost, the weight of the roof panel assembly 1200 and other factors, in this embodiment, the density of the second non-woven fabric layer 2140 is less than the density of the first non-woven fabric layer 130. This design can not only effectively avoid the situation where the first non-woven fabric layer 120 is easily damaged under high temperature conditions, thus extending the service life of the roof panel assembly 1200, but also comprehensively weigh the production cost, the weight required for the roof panel assembly 1200 and other factors, while minimizing the cost, ensuring that the rigidity and strength of the roof panel assembly 1200 are not affected.

It is understandable that the first non-woven fabric layer 120 and the second non-woven fabric layer 130 may also be made of the same material and the same density. Those skilled in the art may adaptively select a suitable material or density according to actual needs, which is not limited here.

It should be noted that the vehicle roof panel assembly 1200 described in the present disclosure is installed in a non-exposed manner, that is, when viewed from the inside of the vehicle to the roof panel assembly 1200, the roof panel assembly 1200 is a smooth whole without any exposed bolts or other fixings. This installation manner not only greatly improves the overall aesthetics of the vehicle, but also meets the safety of the vehicle, preventing the roof panel assembly 1200 from detaching from the vehicle due to emergencies (such as the explosion of the inflatable curtain) during driving. It should be further noted that the vehicle roof panel assembly described in the present disclosure is not only suitable for super-long roof panel assemblies such as Multi-Purpose Vehicles (MPVs), but also for ordinary vehicle roof panel assemblies, which is not limited here.

For MPVs, the ambient lights on them are usually longer than those on ordinary vehicles. The ambient light panel is usually fixed to the vehicle in a single way such as screw connection. However, due to the long ambient light panel, it is easy to cause the ambient light panel to detach from the roof panel assembly 1200 when the inflatable curtain is deployed.

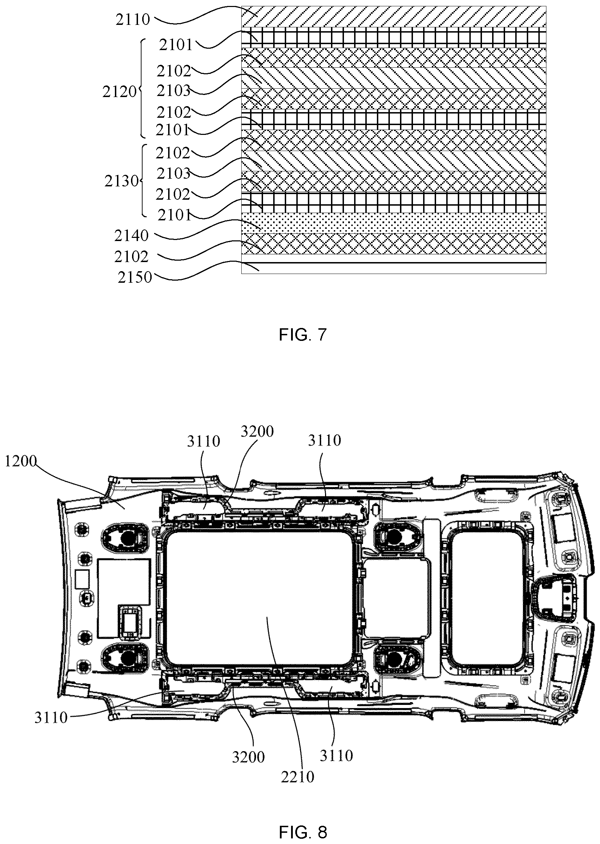

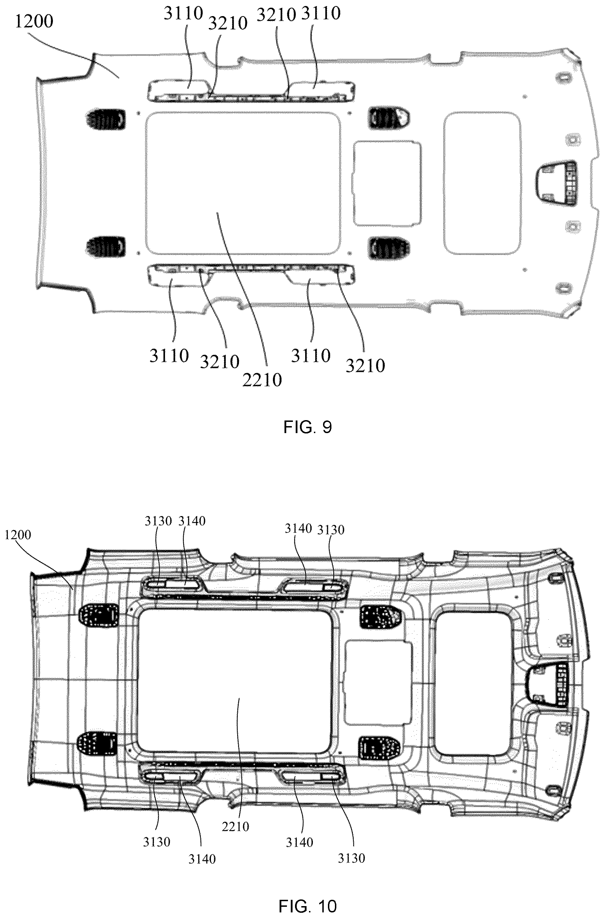

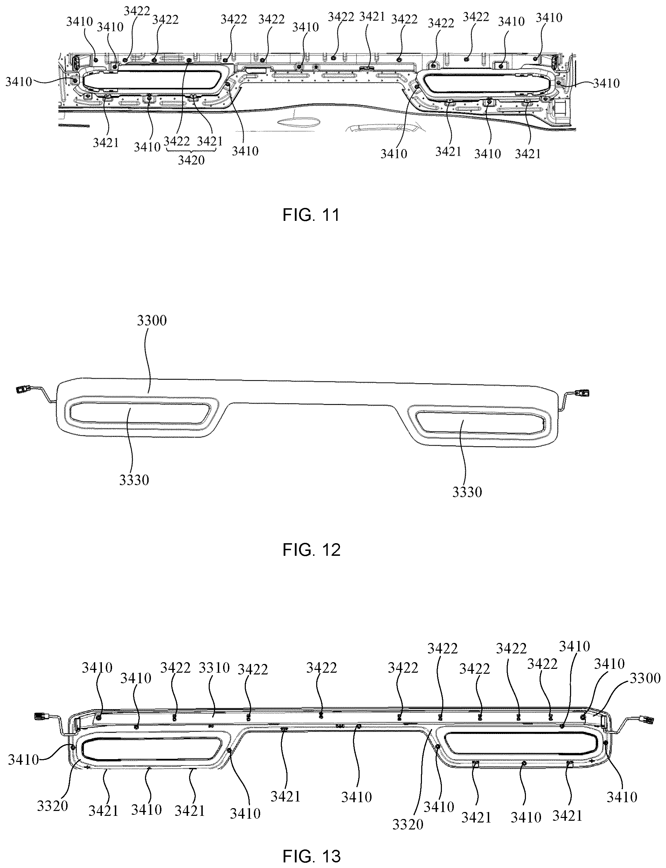

As shown in FIG. 8 to FIG. 12, FIG. 8 is a schematic structural view of the roof panel assembly according to an embodiment of the present disclosure. FIG. 9 is bottom view of the roof panel assembly shown in FIG. 8. FIG. 10 is a schematic structural view of FIG. 9 after installing an ambient light panel. FIG. 11 is a schematic structural view of an ambient light panel fixing structure according to an embodiment of the present disclosure. FIG. 12 is a schematic structural view of an ambient light panel according to an embodiment of the present disclosure. This embodiment can firmly fix the ambient light panel 3300 on the roof panel assembly 1200 of the vehicle, effectively solving the problem that the extra-long ambient light panel 3300 is difficult to install and fix. When the inflatable curtain of the vehicle is detonated, the ambient light panel 3300 can be prevented from falling off the roof panel assembly 1200, which effectively protects the personal safety of the passengers in the vehicle and greatly improves the overall safety of the vehicle.

As shown in FIG. 8 to FIG. 12, in an embodiment of the present disclosure, the roof panel assembly 1200 is provided with a hollow area 3110. In an embodiment, the roof panel assembly 1200 is an approximately rectangular structure and has a certain curvature. A rear sunroof installation port 2210 is provided thereon, and the hollow areas 3110 can be provided on both sides of the rear sunroof installation port 2210, and devices such as a reading lamp 3130 and an air vent 3140 can be integrated and installed in the hollow area 3110 to better enhance the driving experience of passengers. Considering that the roof panel assembly 1200 is relatively long, in order to enhance the driving experience of rear passengers and the overall aesthetics of the vehicle, in this embodiment, there are four hollow areas 3110, which are symmetrically distributed on both sides of the rear sunroof installation port 2210. It can be understood that those skilled in the art can adaptively set the number of hollow areas 3110 according to the length of the roof panel assembly 1200 and the production process, which is not limited here. The ambient light bracket 3200 is similar to a glasses frame structure, which is installed on the side of the roof panel assembly 1200 facing the roof panel assembly sheet metal and is attached to the upper side of the roof panel assembly 1200. The ambient light bracket 3200 is provided along the edge of the hollow area 3110, and part of the structure of the ambient light bracket 3200 is exposed in the hollow area 3110.

In an embodiment, a panel installation part 3210 is provided on the edge of the ambient light bracket 3200, and the panel installation part 3210 extends into the vehicle along the peripheral side of the hollow area 3110 to facilitate the installation of the ambient light panel 3300. In an embodiment of the present disclosure, the ambient light bracket 3200 is integrated with the reinforcement frame 2200 at the ambient light installation port 2250, that is, the ambient light bracket 3200 not only facilitates the installation of the ambient light panel 3210, but also plays a role in strengthening the strength of the hollow area 3110 of the roof panel assembly 1200. In another embodiment of the present disclosure, the ambient light bracket 3200 and the reinforcement frame 2200 at the ambient light installation port 2250 are separately provided. In order to enhance the overall firmness, the ambient light bracket 3200 is an integrated structure of iron. The above-mentioned ambient light panel 3300 is located at the lower side of the roof panel assembly 1200, and the ambient light panel 3300 is connected to the ambient light bracket 3200 in the hollow area 3110 through a connector. In an embodiment, one end of the connector is connected to the side of the ambient light panel 3300 facing the roof panel assembly 1200, and the other end of the connector is connected to the panel installation part 3210, so that the ambient light panel 3300 is fixed on the ambient light bracket 3200. The shape of the ambient light panel 3300 matches the shape of the ambient light bracket 3200, and the ambient light panel 3300 is integrated with a reading lamp 3130 and an air vent 3140, and is exposed inside the vehicle through an integrated installation hole 3330 on the ambient light panel 3300. It should be noted that the lower side of the roof panel assembly 1200 in the present disclosure refers to the side of the roof panel assembly 1200 facing the roof panel assembly 1200 after the vehicle is assembled, and the upper side of the roof panel assembly 1200 refers to the side of the roof panel assembly 1200 facing away from the roof panel assembly 1200.

As shown in FIG. 8 to FIG. 12, since the inflatable curtain (not shown in the figure) is located between the edge of the ambient light bracket 3200 and the roof panel assembly 1200, the strong impact force generated when the inflatable curtain explodes can easily cause the ambient light panel 3300 to detach from the roof panel assembly 1200, causing injuries to the passengers in the car. In order to avoid this situation, in an embodiment of the present disclosure, the connecting member includes a threaded connector 3410 and an elastic clip 3420, and the threaded connector 3410 and the elastic clip 3420 are respectively provided around the edge of the ambient light panel 3300. In an embodiment, since the length of the ambient light panel 3300 in the present disclosure is about 1.2 meters, it belongs to an extra-long ambient light. How to firmly fix this extra-long ambient light panel 3300 on the roof panel assembly 1200 and prevent it from detaching when the inflatable curtain explodes is a difficult problem to solve. Therefore, on the side of the ambient light panel 3300 facing the ambient light bracket 3200, a plurality of elastic clips 3420 and a plurality of threaded connectors 3410 are provided. In the present disclosure, two different manners, namely threaded connection and elastic clamping, are used to more firmly fix the ambient light panel 3300 on the ambient light bracket 3200, which not only effectively solves the problem that the extra-long ambient light is difficult to fix, but also prevents the ambient light panel 3300 from being detached from the roof panel assembly 1200 due to a large impact force when the inflatable curtain is detonated, thereby causing a safety hazard, and greatly improving the safety performance of the entire vehicle.

As shown in FIG. 8, and FIG. 11 to FIG. 13, FIG. 13 shows a schematic structural view of the ambient light panel from another angle according to an embodiment of the present disclosure. The elastic clip 3420 can be installed on the ambient light bracket 3200, and a clip hole (not shown in the figure) is opened at the corresponding position of the ambient light panel 3300. The elastic clip 3420 can also be installed on the ambient light panel 3300, and the clip hole is opened at the corresponding position of the ambient light bracket 3200. However, considering the aesthetics of the vehicle, in order to avoid the exposure of the installation traces, in an embodiment of the present disclosure, a clip hole is opened on the ambient light bracket 3200, and an elastic clip 3420 is provided on the ambient light panel 3300, and the elastic clip 3420 is clipped in the clip hole. In an embodiment, the ambient light bracket 3200 is provided with a plurality of clip holes on the side facing the ambient light panel 3300, and the position of the clip hole corresponds to the position of the elastic clip 3420. When installing the ambient light panel 3300, after aligning each elastic clip 3420 with the corresponding clip hole, the installer lifts the ambient light panel 3300 upward (i.e., toward the roof panel assembly 1200) so that the claws of the elastic clip 3420 are inserted into the clip holes to preliminarily fix the ambient light panel 3300 on the ambient light bracket 3200. From the perspective of the passengers in the car, there is no installation mark on the front of the ambient light panel 3300 (i.e., the side of the ambient light panel 3300 facing the passengers in the car), which on the one hand enhances the overall aesthetics, and on the other hand avoids the clip holes on the ambient light panel 3300 from being subjected to a large impact force when the inflatable curtain is detonated, causing the ambient light panel 3300 to tear and easily cause harm to the passengers in the car. In addition, this design is more convenient for operators to install and improves installation efficiency.

As shown in FIG. 8 and FIG. 11 to FIG. 13, in an embodiment of the present disclosure, the elastic clip 3420 includes a double-sided elastic clip 3422 and a single-sided elastic clip 3421, which are relatively installed on both sides of the ambient light panel 3300. The double-sided elastic clip 3422 and the single-sided elastic clip 3421 are respectively provided at the side of the ambient light panel 3300 facing the ambient light bracket 3200, and the elastic claws 3423 corresponding to the double-sided elastic clip 3422 and the single-sided elastic clip 3421 are both opened toward one side of the ambient light bracket 3200, so that after the ambient light panel 3300 is clipped onto the ambient light bracket 3200, there is no installation mark on the ambient light panel 3300 from the direction of the passengers in the vehicle, thereby improving the overall aesthetics and safety of the vehicle. Furthermore, considering the firmness of the connection, the bilateral elastic clip 3422 and the unilateral elastic clip 3421 are produced by integral injection molding with the ambient light panel 3300.

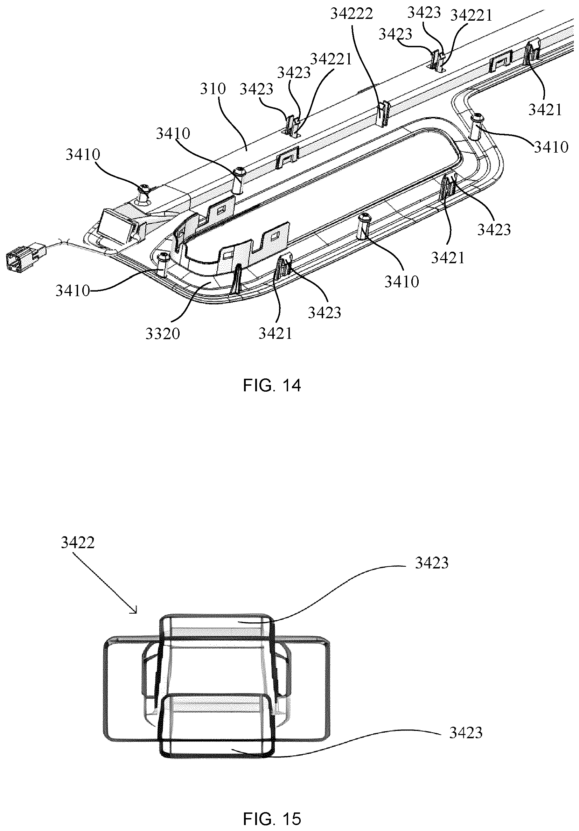

As shown in FIG. 8, FIG. 10, and FIG. 11 to FIG. 14, FIG. 14 is a partial enlarged view of the ambient light panel according to an embodiment of the present disclosure. Since the clamping force of the double-sided elastic clip 3422 is greater than that of the single-sided elastic clip 3421, the space it occupies is also more than that of the single-sided elastic clip 3421. Considering that a wiring harness (not shown in the figure) needs to be provided near the ambient light panel 3300, and components such as the air vent need to be integrated and installed in the ambient light panel 3300, in order to provide sufficient installation space for each component, in an embodiment of the present disclosure, there are multiple double-sided elastic clips 3422, and multiple double-sided elastic clips 3422 are installed on the side of the ambient light panel 3300 away from the edge of the roof panel assembly 1200, and adjacent double-sided elastic clips 3422 are spaced a certain distance apart. When the ambient light panel 3300 needs to be installed, the double-sided elastic clip 3422 is aligned with the corresponding clamping hole, and the ambient light panel 3300 is lifted upward, so that the two elastic claws 3423 on the double-sided elastic clip 3422 are squeezed by the clamping hole and contract inward, and after passing through the clamping hole, the two elastic claws 3423 are released and open outward, thereby clamping the ambient light panel 3300 on the ambient light bracket 3200. Furthermore, this design not only reserves sufficient installation space for various components, but also ensures that the ambient light panel 3300 will not be opened from the top due to a large impact force when the inflatable curtain is detonated, due to the double-sided elastic clip 3422 is provided more densely on the side of the ambient light panel 3300 away from the edge of the interior panel, causing the ambient light panel 3300 to be separated from the original fixed position and cause harm to the occupants in the vehicle, thereby greatly improving the safety of the vehicle.

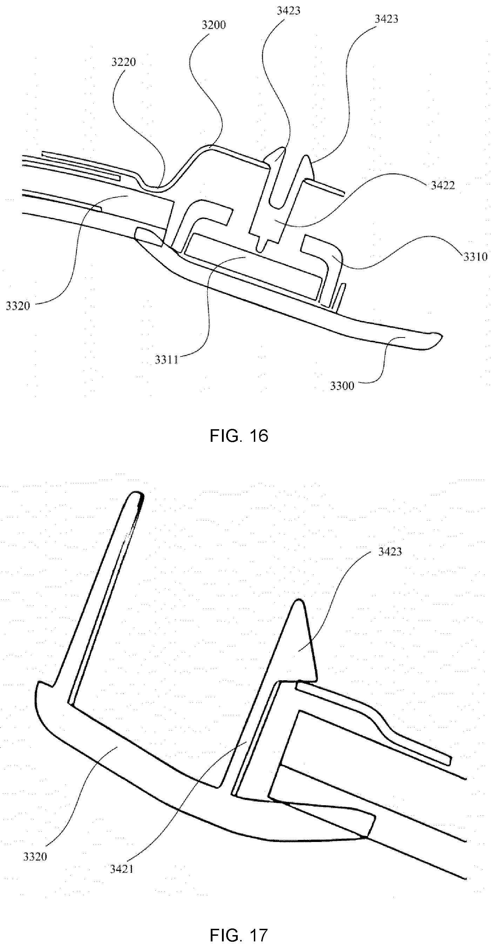

As shown in FIG. 8, FIG. 10, and FIG. 11 to FIG. 16, FIG. 15 is a schematic structural view of a double-sided elastic clip according to an embodiment of the present disclosure, and FIG. 16 is a schematic structural view of a connection between the double-sided elastic clip and an ambient light bracket according to an embodiment of the present disclosure. In an embodiment of the present disclosure, the side of the atmosphere lamp panel 3300 facing the atmosphere lamp bracket 3200 includes a lamp shell 3310 and a back shell 3320, and the double-sided elastic clip 3422 includes a first double-sided elastic clip 34221 and a second double-sided elastic clip 34222. A plurality of first double-sided elastic clips 34221 are installed on the lamp shell 3310, and a plurality of second double-sided elastic clips 34222 are installed on the back shell 3320, and the opening and closing directions of the first double-sided elastic clip 34221 and the second double-sided elastic clip 34222 are different. In an embodiment, a luminous body 3311 is installed in the lamp shell 3310 to achieve the change of different lighting effects, the luminous body 3311 can be any component with a light emitting effect such as a lamp tube and a light strip. Considering that after the whole vehicle is assembled, the atmosphere lamp bracket 3200 has a corresponding accommodation space (not shown in the figure), and the lamp shell 3310 is located in a larger accommodation space, the opening and closing mode of the first double-sided elastic clip 34221 thereon will not interfere with the installation and assembly of other components. Therefore, the first double-sided elastic clip 34221 installed on the lamp shell 3310, its two elastic claws 3423 open and close along the width direction of the lamp shell 3310.

The back shell 3320 also needs to be integrated with the air vent 130 and other components. Limited by the position of the air vent 130, and considering that the gap between adjacent components must meet the standard, if the opening and closing direction of the second double-sided elastic clip 34222 is the same as that of the first double-sided elastic clip 34221 in the original position, it will occupy the space of the original lamp shell 3310, resulting in the inability to install the lamp shell 3310. If the second double-sided elastic clip 34222 is moved toward the air vent 130, it will be too close to the air vent 130, resulting in easy damage during assembly. Therefore, taking all the above factors into consideration, the second double-sided elastic clip 34222 installed on the back shell 3320 has two elastic claws 3423 that open and close along the length direction of the back shell 3320, and the second double-sided elastic clip 34222 is provided in a direction close to the lamp shell 3310. Furthermore, since the straight line where the opening and closing direction of the first double-sided elastic clip 34221 is located is perpendicular to the straight line where the opening and closing direction of the second double-sided elastic clip 34222 is located, it is ensured that the ambient light panel 3300 is subjected to the effect of the clamping force at different angles, so that the ambient light panel 3300 is more firmly fixed on the ambient light bracket 3200, and is less likely to fly out when the inflatable curtain is ignited.

As shown in FIG. 8, FIG. 10, and FIG. 11 to FIG. 16, in an embodiment of the present disclosure, a bending part 3220 is formed on the side of the ambient light bracket 3200 that contacts the back shell 3320. In an embodiment, the ambient light bracket 3200 is bent on the side of the lamp shell 3310 that contacts the back shell 3320, and abuts against the back shell 3320 through the bent end surface. Therefore, when the inflatable curtain explodes, the bent end surface can effectively alleviate the impact force on the ambient light bracket 3200, achieving a shock-absorbing effect. It is prevented that the ambient light bracket 3200 is shaken by force, causing the elastic clip 3420 to detach from the clip hole, resulting in unstable clipping of the ambient light panel 3300, and even the risk of flying out. This allows the ambient light panel 3300 to be more firmly fixed on the ambient light bracket 3200, which not only ensures the safety of the vehicle, but also effectively improves the NVH performance of the vehicle, thereby improving the driving experience of passengers.

As shown in FIG. 8, FIG. 10, FIG. 11 to FIG. 14, and FIG. 17, FIG. 17 shows a schematic structural view of the connection between a single-sided elastic clip and the ambient light bracket according to an embodiment of the present disclosure. In an embodiment of the present disclosure, there are multiple unilateral elastic clips 3421, and the multiple unilateral elastic clips 3421 are installed on one side of the ambient light panel 3300 close to the edge of the roof panel assembly 1200, and there is a certain distance between two adjacent unilateral elastic clips 3421. The unilateral elastic clip 3421 has an elastic claw 3423, and the elastic claw 3423 opens toward the edge of the roof panel assembly 1200. During installation, after aligning the single-sided elastic clip 3421 with the corresponding snap-in hole, lift the ambient light panel 3300 upwards so that the elastic claw 3423 on the single-sided elastic clip 3421 is squeezed by the snap-in hole and contracts inwards. After passing through the snap-in hole, the elastic claw 3423 is released and opens outwards, thereby snapping the ambient light panel 3300 onto the ambient light bracket 3200, and achieving snap-in fixation between the ambient light panel 3300 and the ambient light.

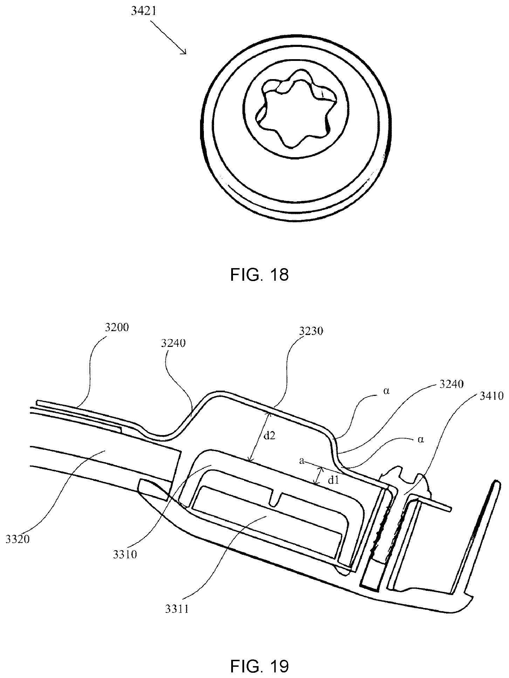

As shown in FIG. 8, FIG. 10, FIG. 12 to FIG. 14, and FIG. 18 to FIG. 19, FIG. 18 shows a schematic structural view of a self-tapping screw according to an embodiment of the present disclosure, and FIG. 19 shows a schematic structural view showing the connection between the self-tapping screw and the ambient light bracket according to an embodiment of the present disclosure. Since the inflatable curtain is located between the edge of the roof panel assembly 1200 and the ambient light panel 3300, when the inflatable curtain is detonated, a strong impact force is generated, and the ambient light panel 3300 located on the upper side of the inflatable curtain is very easy to be separated from the ambient light bracket 3200 under the action of the impact force.

In order to avoid this situation, in an embodiment of the present disclosure, the threaded connector 3410 includes a plurality of self-tapping screws, and the ambient light panel 3300 is fixed to the ambient light bracket 3200 by the plurality of self-tapping screws. Since the fastening force of the self-tapping screws is much greater than the fastening force of the elastic clip 3420, the ambient light panel 3300 can be more firmly fixed to the ambient light bracket 3200. In an embodiment, an integrated installation hole 3330 is provided on the ambient light panel 3300, on which the air vent 3140 and the reading lamp 3130 are integrated and installed. A plurality of self-tapping screws are provided along the edge of the integrated installation hole 3330, and during installation, the self-tapping screws are threadedly connected to the ambient light bracket 3200 for fixing. Furthermore, considering that the clamping force of the unilateral elastic clip 3421 is relatively weak, more self-tapping screws can be provided at the side of the integrated installation hole 3330 close to the inflatable curtain to ensure that the air vent 3140 and the reading lamp 3130 can be firmly fixed on the roof panel assembly 1200. Furthermore, for vehicle production, economy is a particularly important factor and also needs to be considered. Compared with the elastic clip 3420, the self-tapping screw has better fastening force, but the cost is higher. Therefore, after comprehensively weighing various factors, a larger number of self-tapping screws can be provided at the side of the integrated installation hole 3330 close to the inflatable curtain, and a smaller number of self-tapping screws can be provided at the side of the integrated installation hole 3330 far from the inflatable curtain. The self-tapping screws, the double-sided elastic clip 3422 and the single-sided elastic clip 3421 together firmly fix the ambient light panel 3300 on the roof panel assembly 1200, effectively solving the risk of the ambient light panel 3300 flying out when the inflatable curtain is detonated, achieving a balance between convenience, reliability, safety and economy, and facilitating mass production.

As shown in FIG. 8, FIG. 10, FIG. 12 to FIG. 14, and FIG. 18 to FIG. 19, since the minimum distance requirement of static parts requires that the distance between two adjacent parts should be greater than or equal to 5 mm, and the distance d1 between the extension line a of the atmosphere lamp bracket 3200 and the end face of the lamp shell 3310 is less than 5 mm, which does not meet the minimum distance requirement of static parts, and easily causes friction between the lamp shell 3310 and the atmosphere lamp bracket 3200, resulting in abnormal noise. In order to avoid this situation, in an embodiment of the present disclosure, the atmosphere lamp bracket 3200 located on the upper side of the lamp shell 3310 is in the shape of a letter "J". The distance d2 between the extension surface 3230 of the atmosphere lamp bracket 3200 and the end face of the lamp shell 3310 is 8 mm, and the two connecting surfaces 3240 of the atmosphere lamp bracket 3200 are respectively connected to the end faces of the connected atmosphere lamp bracket 3200, and the connecting angle α meets the minimum process R angle limit. While minimizing the space occupied, the distance between the end faces of the ambient light bracket 3200 and the lamp shell 3310 meets the minimum distance requirement for static parts, effectively preventing the generation of abnormal noise.

As shown in FIG. 8 to FIG. 11, in an embodiment of the present disclosure, a hot melt adhesive connection part (not shown in the figure) is provided between the ambient light bracket 3200 and the roof panel assembly 1200. The hot melt adhesive connection part is used to apply hot melt adhesive so as to achieve the fixed connection between the ambient light bracket 3200 and the roof panel assembly 1200 through the hot melt adhesive connection part. The hot melt adhesive connection part can be provided at the side of the roof panel assembly 1200 facing the ambient light bracket 3200, or can be provided at the side of the ambient light bracket 3200 facing the roof panel assembly 1200. Considering the convenience of installation and production and processing, in an embodiment of the present disclosure, the hot melt adhesive connection part is provided on the ambient light bracket 3200, and the ambient light bracket 3200 is bonded to the side of the roof panel assembly 1200 away from the ambient light panel 3300 through the hot melt adhesive connection part. By bonding the ambient light bracket 3200 and the roof panel assembly 1200 together, the ambient light bracket 3200 is firmly fixed on the roof panel assembly 1200 to ensure that the ambient light bracket 3200 will not be separated from the roof panel assembly 1200.

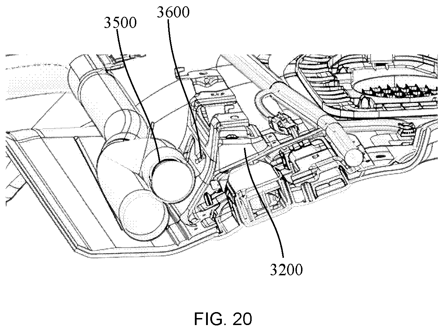

As shown in FIG. 8 to FIG. 10 and FIG. 20, which is a schematic structural view of a shielding frame and the ambient light bracket according to an embodiment of the present disclosure. In an embodiment of the present disclosure, a shielding frame 3600 is provided between the ambient light bracket 3200 and the inflatable curtain generator 3500. The shielding frame 3600 is L-shaped and is provided at the side of the ambient light bracket 3200 facing the inflatable curtain generator 3500. After the inflatable curtain is detonated, the shielding frame 3600 can effectively guide the deployment direction of the inflatable curtain and resist part of the impact force of the inflatable curtain to protect the ambient light panel 3300, the reading lamp 140 and other components from flying out.

In this embodiment, the ambient light bracket is installed on the upper side of the roof panel assembly 1200, the ambient light panel is installed on the lower side of the roof panel assembly 1200, and the ambient light panel and the ambient light bracket are fixedly connected by a connector. For an extra-long ambient light panel, it can be firmly fixed on the ambient light bracket through a threaded connector and an elastic clip, which effectively solves the problem that the extra-long ambient light panel is not easy to install and fix. Furthermore, when the inflatable curtain of the vehicle is detonated, due to the strong fastening force of the threaded connector and the clamping force of the elastic clip, the ambient light panel can be prevented from falling out, which effectively protects the personal safety of the passengers in the vehicle and greatly improves the overall safety of the vehicle.

In an embodiment of the present disclosure, the present disclosure further provides a vehicle, the vehicle is provided with the roof panel assembly fixing structure described in any of the above embodiments. The vehicle further includes a braking system (not shown in the figure), a steering control system (not shown in the figure), an interior component (not shown in the figure) and a vehicle floor (not shown in the figure), etc. It should be noted that other structures of the vehicle, such as the braking system, the steering control system, etc., are already well known to those skilled in the art, so other structures of the vehicle are not described in detail here.

The present disclosure is provided with a rigidly connected guide plate at the connection between the upper pillar panel assembly 1100 and the side wall of the roof panel assembly 1200, so as to guide the inflatable curtain to unfold through the roof panel assembly 1200 along the guide direction when it is detonated. A clamping groove is further provided at the connection between the upper pillar panel assembly 1100 and the side wall of the roof panel assembly 1200, so that the end of the roof panel assembly 1200 side wall is overlapped on the clamping groove of the upper pillar panel assembly 1100 in a docking manner, thereby increasing the connection area to ensure the strength of the connection between the roof panel assembly 1200 and the upper pillar panel assembly 1100, and avoiding the fracture of part of the structure of the upper pillar panel assembly 1100. The roof panel assembly fixing structure designs the upper pillar panel assembly 1100, the clamping groove and the guide plate as an integrated structure, which can ensure its own strength with a simple structure, guide the inflatable curtain to unfold smoothly when it explodes, and avoid the roof panel assembly 1200 and connecting accessories from falling off when the air curtain is detonated. Therefore, the present disclosure effectively overcomes some practical problems and has a high utilization value and use significance.

The above describes only specific embodiments of the present disclosure, but the scope of protection of the present disclosure is not limited thereto. Any person skilled in the art can make equivalent substitutions or changes based on the content disclosed in the present disclosure, and such substitutions or changes should fall within the scope of protection of the present disclosure.

## Claims

1. A roof panel assembly fixing structure, **characterized by** comprising:
a roof panel assembly provided at an inner side of a body side inner plate;
an upper pillar panel assembly provided at the inner side of the body side inner plate; and
an inflatable curtain provided between the body side inner plate and a side wall of the roof panel assembly;
wherein an end of the side wall of the roof panel assembly is connected to a top end of the upper pillar panel assembly, and the roof panel assembly and the upper pillar panel assembly are configured such that when the end of the side wall of the roof panel assembly is displaced toward a vehicle due to an impact of the inflatable curtain, the top end of the upper pillar panel assembly is configured to avoid a displacement path of the end of the side wall of the roof panel assembly.

2. The roof panel assembly fixing structure according to claim 1, wherein a clamping groove is provided at the top end of the upper pillar panel assembly, the clamping groove is recessed toward an inner edge of the upper pillar panel assembly, and the end of the side wall of the roof panel assembly is engaged within the clamping groove.

3. The roof panel assembly fixing structure according to claim 2, wherein a docking plate is provided at the end of the side wall of the roof panel assembly, the docking plate is engaged and fitted on an inner wall of a side of the clamping groove connected to the upper pillar panel assembly.

4. The roof panel assembly fixing structure according to claim 3, wherein a limiting structure is provided between the docking plate and the clamping groove, the limiting structure is configured to restrict a relative displacement of the docking plate and the clamping groove.

5. The roof panel assembly fixing structure according to claim 4, wherein the limiting structure comprises a guide groove and a connector, the guide groove is provided at an inner wall of a side of the clamping groove, the guide groove is configured to extend from a surface of the inner wall to a bottom of the clamping groove, an opening of the guide groove is provided at an outer edge of the clamping groove facing an inside of the vehicle; and the connector is provided at the docking plate and configured to slide within and be clamped by the guide groove.

6. The roof panel assembly fixing structure according to claim 1, wherein the roof panel assembly comprises a double-layer structure.

7. The roof panel assembly fixing structure according to claim 2, wherein a guide plate is provided at the top of the upper pillar panel assembly, the guide plate is connected to an upper of the clamping groove, the guide plate is configured to extend from the upper pillar panel assembly toward the side of the body side inner plate, and an extended end of the guide plate is inserted into the body side inner plate.

8. The roof panel assembly fixing structure according to claim 7, wherein the extended end of the guide plate is inserted into an insertion groove of the body side inner plate, and an end of the guide plate is provided with felt.

9. The roof panel assembly fixing structure according to claim 7, wherein the guide plate and the side wall of the roof panel assembly are configured to form a V-shaped groove.

10. The roof panel assembly fixing structure according to claim 1, wherein a plurality of functional component installation ports are provided at the roof panel assembly, the roof panel assembly further comprises:
a plurality of reinforcement frames installed at the roof panel assembly, wherein each of the reinforcement frames is provided around a corresponding functional component installation port, and
wherein a shape of each of the reinforcement frames is adapted to the shape of the functional component installation port.

11. The roof panel assembly fixing structure according to claim 10, wherein a plurality of elastic pads are provided along an edge of the roof panel assembly, the plurality of the elastic pads are symmetrically bonded to both side edges of the roof panel assembly, and each elastic pad has a same length.

12. The roof panel assembly fixing structure according to claim 10, wherein a roof screen installation port is opened at the roof panel assembly, the roof screen installation port is located between two functional component installation ports, and both sides of the roof screen installation port are installed with reinforcement bridges, a central axis of the roof screen installation port coincides with central axes of the two adjacent functional component installation ports, and the reinforcement bridges are distributed along both sides of the central axis of the roof screen installation port.

13. The roof panel assembly fixing structure according to claim 1, wherein the roof panel assembly is provided with a hollow area, the roof panel assembly fixing structure further comprises:
an ambient light bracket attached to an upper side of the roof panel assembly, wherein the ambient light bracket is provided along an edge of the hollow area, and a part of the ambient light bracket structure is exposed within the hollow area; and
an ambient light panel located at a lower side of the roof panel assembly, wherein the ambient light panel is connected to the ambient light bracket in the hollow area through a connecting piece.

14. The roof panel assembly fixing structure according to claim 13, wherein the connecting piece comprises a threaded connecting member and an elastic clip, the threaded connecting member and the elastic clip are respectively surrounded around an edge of the ambient light panel.

15. A vehicle, **characterized by** comprising the roof panel assembly fixing structure according to any one of claims 1 to 14.
